**Europäisches Patentamt**

**European Patent Office**

**Office européen des brevets**

(19)

(11) Numéro de publication: **0 147 305**
**B1**

# FASCICULE DE BREVET EUROPÉEN

(12)

(45) Date de publication du fascicule du brevet:
**21.09.88**

(51) Int. Cl.⁴: **G 01 S 13/95,** G 01 S 13/52

(21) Numéro de dépôt: **84402632.8**

(22) Date de dépôt: **18.12.84**

(54) **Dispositif de discrimination d'échos radar.**

(30) Priorité: **23.12.83 FR 8320679**

(43) Date de publication de la demande:
**03.07.85 Bulletin 85/27**

(45) Mention de la délivrance du brevet:
**21.09.88 Bulletin 88/38**

(84) Etats contractants désignés:
**AT BE CH DE FR GB IT LI LU NL SE**

(56) Documents cité:
**US-A-4 139 847**
**US-A-4 318 100**

(73) Titulaire: **THOMSON- CSF, 173, Boulevard Haussmann, F-75379 Paris Cédex 08 (FR)**

(72) Inventeur: **Resibois, Michel, Thomson- CSF SCPI 173, bld. Haussmann, F-75379 Paris Cedex 08 (FR)**

(74) Mandataire: **Chaverneff, Vladimir, THOMSON- CSF SCPI 19, avenue de Messine, F-75008 Paris (FR)**

# 0 147 305

**Description**

La présente invention concerne un dispositif de discrimination d'échos radar en fonction de leur nature écho de sol, écho de pluie, écho de mer, écho de cibles mobiles, etc. Elle s'applique plus particulièrement aux radars météorologiques à poste fixe pour lesquels les échos dûs à la pluie doivent être distingués des échos dûs au sol, ces derniers devant être éliminés.

Pour séparer les échos de pluie ou de nuages denses, des échos fixes ou de cibles, il est connu de faire appel soit à la technique dite de polarisation circulaire, soit à la technique dite "MTI" (abréviation de l'appellation anglo-saxonne "Moving Target Indicator") à mesure de phase, soit à l'utilisation d'hypothèses sur la longueur ou sur l'uniformité des échos de nuage ou de pluie.

Parmi toutes ces techniques, seule la première est efficace, la seconde donnant des résultats variables et imparfaits sur les précipitations, et la troisième n'ayant jamais satisfait pleinement les utilisateurs.

On connaît d'après les Brevets US-A-4 139 847 et 4 318 100 un autre principe basé sur le fait que les paramètres définissant les variations d'échos radar, traitées comme des phénomènes aléatoires, à savoir la répartition d'amplitude et la fonction d'auto-corrélation, ont des valeurs très différentes selon la nature des échos, et plus particulièrement sur le fait que la puissance reçue d'un écho fixe evolue en moyenne moins, et plus lentement, que celle reçue d'un écho de pluie.

La présente invention a pour objet un dispositif de discrimination d'échos radar qui présente des performances meilleures que celles des dispositifs desdits Brevets US, conformément à la revendication 1.

Les objets et caractéristiques de la présente invention apparaîtront plus clairement à la lecture de la description suivante d'exemples de réalisation, faite en relation avec les dessins ci- annexés dans lesquels:

- la figure 1 représente un schéma de principe du dispositif connu de l'état de la technique;
- la figure 2 est une courbe de variation d'un terme correctif dû à la superposition d'un écho fixe et d'un écho de pluie;
- la figure 3 représente un premier exemple de réalisation d'un dispositif estimateur de variance avec une chaîne d'amplification vidéo linéaire et un traitement analogique du signal;
- la figure 4 représente un deuxième exemple de réalisation d'un dispositif estimateur de variance avec une chaîne d'amplification vidéo linéaire et un traitement numérique du signal;
- la figure 5 représente un exemple de réalisation préféré de l'invention, avec une chaîne d'amplification vidéo logarithmique et un traitement numérique du signal; et
- la figure 6 est un diagramme représentant la fonction de transfert d'un circuit de la figure 5.

Sur ces différentes figures, des éléments identiques ont été représentés avec les mêmes références.

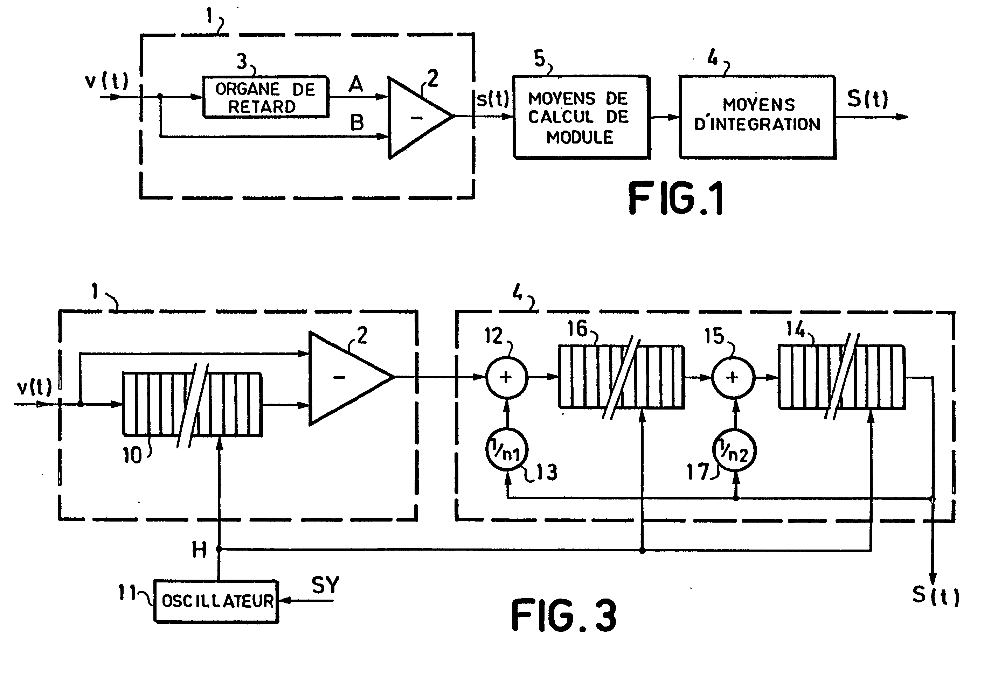

Le dispositif de discrimination représenté sur la figure 1 comporte des moyens de calcul de fluctuation 1 pour retrancher l'amplitude B du signal vidéo incident $v(t)$, correspondant à une impulsion donnée émise par le radar, de l'amplitude A du signal vidéo mémorisé, correspondant à une impulsion émise précédemment par le radar. Ces moyens de calcul de fluctuation comportent un soustracteur 2 qui reçoit d'une part le signal vidéo incident $v(t)$, d'autre part le signal vidéo $v(t)$ retardé au moyen d'un organe de retard 3. Le retard $\tau_1$ apporté par l'organe de retard 3 peut être égal à la période de répétition T du radar à impulsions ou à un multiple de celle-ci. On précise que la vitesse de rotation de l'antenne d'émission d'un radar météorologique étant très faible (de l'ordre de 2°/s), on peut considérer que les amplitudes A et B se rapportent à une même direction de l'antenne d'émission. Par ailleurs, pour une direction donnée de l'antenne d'émission, les amplitudes A et B se rapportent à un même point élémentaire situé dans cette direction (le pouvoir de discrimination en distance du radar entre deux points élémentaires étant égal à la durée d'impulsion $\tau$).

La difference d'amplitude A - B obtenue à l'issue du calcul de fluctuation représente la partie fluctuante du signal vidéo, et est d'autant plus grande que la fluctuation du signal vidéo est rapide par rapport au temps séparant les echos successifs traités relativement à un même point élémentaire.

Comme la puissance reçue d'un écho fixe évolue en moyenne moins, et plus lentement, que celle d'un écho de pluie, les échos dûs au sol se trouvent fortement atténués dans le signal différence A - B. La discrimination entre échos de pluie et échos dûs au sol peut alors découler soit d'une simple observation de ce signal différence, soit d'un traitement ultérieur plus complexe de ce signal.

Il est possible d'ajoindre aux moyens de calcul de fluctuation 1 des moyens d'intégration 4 permettant d'effectuer un calcul de moyenne sur un temps $\tau_2$ du signal différence A - B. Le temps $\tau_2$ d'intégration permet une estimation de l'amplitude efficace de fluctuation du signal. Cette estimation est d'autant plus précise que le temps $\tau_2$ est grand. Le temps $\tau_2$ est alors un compromis entre cette condition et le temps de passage maximum du faisceau de l'antenne sur un point élémentaire.

Des moyens 5 pour calculer le module de la différence A - B sont disposés en sortie des moyens de calcul de fluctuation 1.

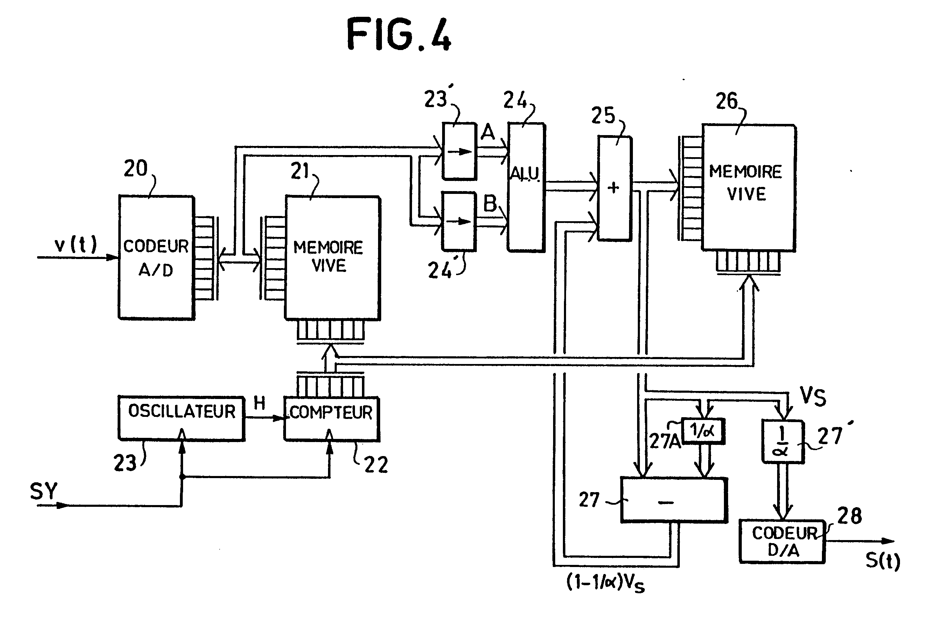

L'exemple de réalisation représenté sur la figure 3 comprend un circuit de traitement analogique à amplification vidéo linéaire

L'organe de retard 3 faisant partie des moyens de calcul de fluctuation est réalisé au moyen d'un registre à transfert de charges 10 particulièrement apte à réaliser une ligne à retard. Le nombre de cellules élémentaires de ce registre à transfert de charges est au moins égal au nombre de points élémentaires possibles pendant la durée $\tau_1$. La fréquence des points élémentaires étant égale à $1/\tau$, le registre à transfert de charges est activé par un signal d'horloge H de fréquence égale à $2/\tau$. Le signal d'horloge H est fourni par un oscillateur 11 qui est commandé par un signal SY de synchronisation radar définissant la distance zéro.

Les moyens d'intégration 4 sont par exemple réalisés au moyen d'un filtre numérique récursif comportant un premier additionneur 12 qui reçoit d'une part le signal de sortie des moyens de calcul de fluctuation, d'autre part le signal fourni par un multiplieur 13 par un coefficient $1/n_1$. Le multiplieur 13 a son entrée reliée à la sortie d'une ligne à retard, qui est avantageusement un registre à transfert de charges 14 dont l'entrée est à son tour reliée à la sortie d'un additionneur 15. L'additionneur 15 reçoit d'une part le signal de sortie d'une ligne à retard, qui est avantageusement un registre à transfert de charges 16 qui a lui-même son entrée reliée à la sortie de l'additionneur 12, d'autre part le signal de sortie d'un multiplieur 17 par un coefficient $1/n_2$ qui a lui-même son entrée reliée à la sortie du registre à transfert de charges 14. Les registres à transfert de charges 14 et 16 reçoivent le même signal d'horloge H que le registre à transfert de charges 10 et leur nombre de cellules élémentaires répond aux mêmes conditions.

Il est possible de réaliser suivant le même principe un traitement numérique appliqué à une chaîne d'amplification vidéo linéaire. Cette solution est décrite en relation avec la figure 4.

Le signal vidéo $v(t)$ est alors codé dans un codeur analogique- numérique 20 dont la fréquence d'échantillonnage est égale à $2/\tau$ au moins. Les mots binaires successifs issus du codeur 20, qui représentent l'amplitude des échantillons, sont ensuite traités soit par une logique séquentielle, soit par une machine microprogrammée, l'organigramme de traitement étant le suivant:

- codage, au moyen du codeur analogique-numérique 20, de l'échantillon prélevé à l'instant t sur le signal vidéo $v(t)$,
- lecture, à une certaine adresse A d'une mémoire vive 21, de l'échantillon prélevé à l'instant $t-\tau_1$ sur le signal vidéo, codé, et mémorisé dans cette mémoire,
- écriture, à cette même adresse A de la mémoire 21, de l'échantillon codé prélevé à l'instant t (la mémoire 21 étant adressée séquentiellement par un compteur 22 qui est incrémenté par le signal H défini précédemment, fourni par un oscillateur 23, et qui est remis à zéro par le signal SY de synchronisation radar défini précédemment),
- calcul au moyen d'une unité arithmétique et logique 24 de la valeur absolue de la différence entre les amplitudes des échantillons codés prélevés aux instants t et $t-\tau_1$, ces amplitudes étant redressées au moyen de redresseurs 23' et 24',
- introduction de cette différence dans l'algorithme de calcul de moyenne sur $\tau_2$, ce calcul étant par exemple effectué au moyen d'un additionneur 25 associé à une mémoire vive 26 qui est adressée par le compteur 22 et dans laquelle sont écrits les résultats fournis par l'additonneur 25, ce dernier recevant d'une part les données fournies par l'unité arithmétique et logique 24, d'autre part les données fournies par un soustracteur 27, le soustracteur 27 recevant d'une part le signal de sortie de l'additionneur 25, d'autre part ce même signal multiplié par un coefficient $1/\alpha$ (multiplicateur 27A),
- obtention de la valeur numérique de la moyenne au point considéré, après multiplication de la valeur obtenue en sortie de la mémoire 26 par le coefficient $1/\alpha$ au moyen d'un multiplieur 27',
- conversion numérique-analogique de cette valeur au moyen d'un codeur numérique-analogique 28.

La taille des mémoires 21 et 26 obéit aux mêmes conditions que celles exposées précédemment pour les registres à transfert de charges de la figure 3.

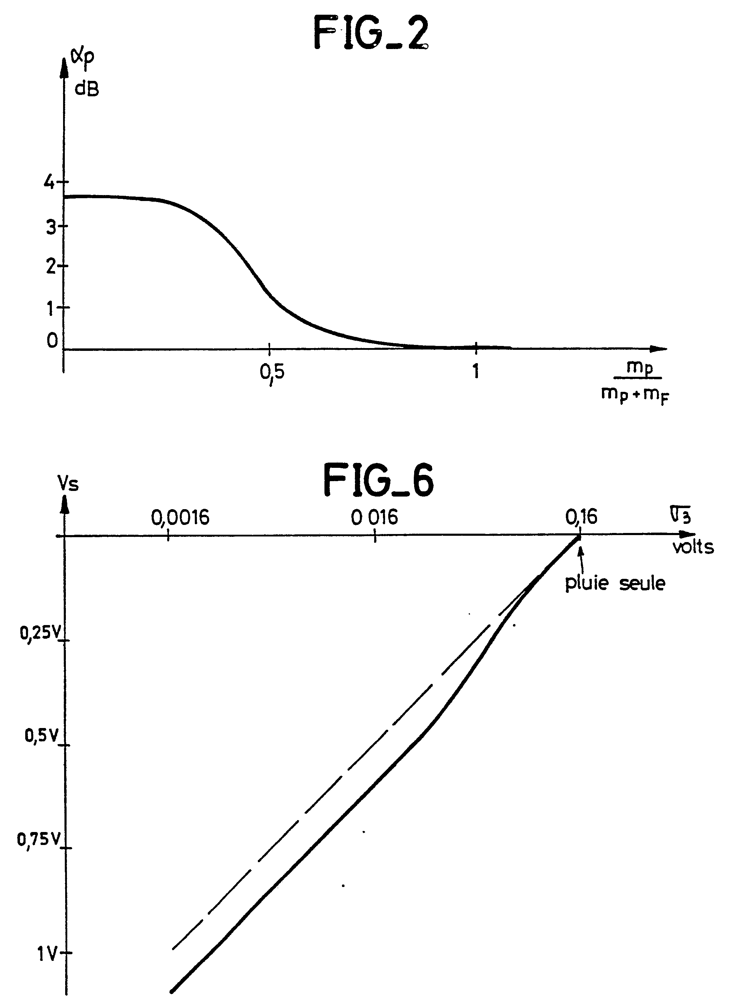

La superposition d'un écho fixe et d'un écho de pluie entraîne une erreur d'estimation de l'écho de pluie avec ce dispositif. Cette erreur, dont une courbe de variation est représentée sur la figure 2, peut être gênante. Le dispositif de l'invention, décrit ci-dessous, permet, outre une réalisation aisée de l'objet de cette invention, de compenser cette erreur facilement, et de fournir ainsi une estimation correcte du niveau de "clutter".

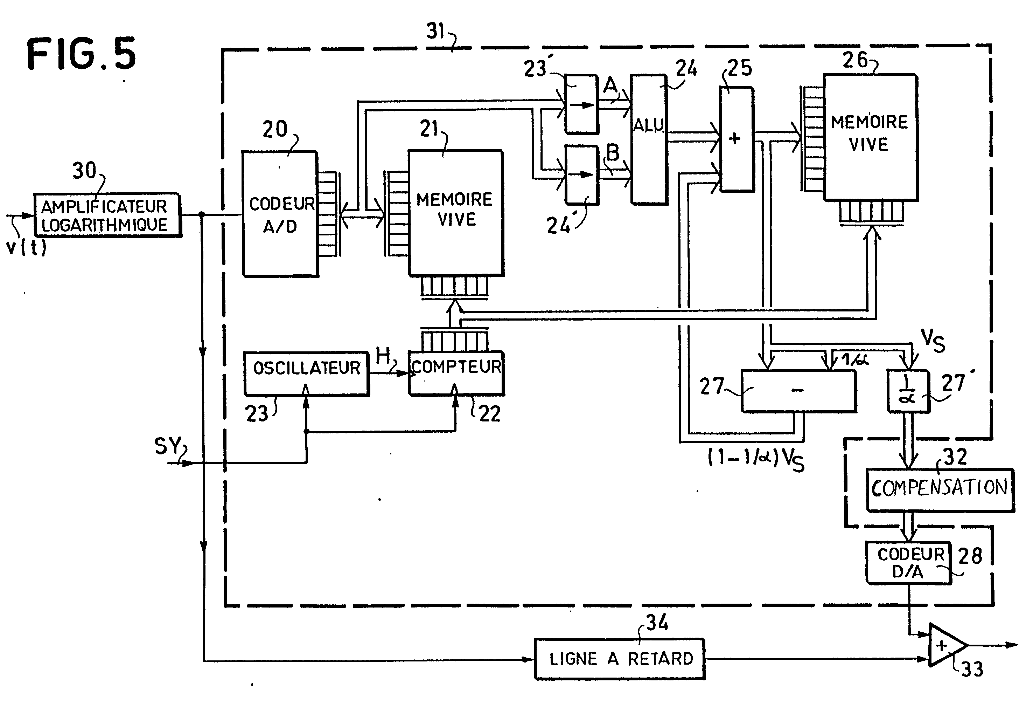

La figure 5 représente un exemple de réalisation numérique, conforme à l'invention, associé à une chaîne d'amplification vidéo logarithmique, pour la production d'une estimation de variance relative.

On expose tout d'abord les modifications à apporter par rapport aux cas précédents correspondant à une chaîne d'amplification vidéo linéaire.

Dans le cas d'une chaîne vidéo logarithmique, le signal d'éntrée du dispositif de discrimination s'exprime sous la forme $K \log v(t)$, ce signal étant obtenu à partir du signal vidéo linéaire $v(t)$ au moyen d'un amplificateur logarithmique d'entrée 30.

Un écho étant défini par sa valeur moyenne m et son écart type $\sigma$, on suppose à l'entrée de l'amplificateur logarithmique d'entrée 30 un écho fixe de valeur moyenne $m_F$ et d'écart-type $\sigma_F$ superposé à un écho de pluie de valeur moyenne $m_P$ et d'écart-type $\sigma_P$.

A l'entrée de l'amplificateur logarithmique d'entrée on obtient respectivement comme valeur moyenne et comme variance:

$$m_1 = m_F + m_P$$
et
$$\sigma_1^2 = \sigma_F^2 + \sigma_P^2 \cdot \alpha_P^2$$

et en sortie de l'amplificateur logarithmique d'entrée, en assimilant, autour de la valeur moyenne du signal, la fonction logarithmique à sa dérivée, on obtient:

$$m_2 = K \log(m_F + m_P)$$
et
$$\sigma_2^2 = \frac{k^2 (\sigma_F^2 + \sigma_P^2 \cdot \sigma_P^2)}{(m_F + m_P)^2}$$
(avec $k = K/2,3$).

En sortie d'un dispositif de discrimination 31 identique à celui décrit jusqu'à présent en relation avec une amplification vidéo linéaire, on obtient:

$$m_3 = 0$$
et
$$\sigma_3 = \frac{\sqrt{2}\, k\sigma_P \cdot \alpha_P}{m_F + m_P}$$

en négligeant le terme résiduel d'écho fixe.

Si l'on fait suivre ce dispositif 31 par un amplificateur logarithmique 32 identique à l'amplificateur logarithmique d'entrée 30 mais avec compensation par le terme de correction K log $\alpha_P$, on obtient alors:

$$K \log \sigma_3 - K \log \alpha_P$$

soit

$$K \log \sqrt{2} + K \log k + K \log \sigma_P - K \log (m_F + m_P)$$

En fait, comme représenté sur la figure 5, l'amplificateur 32 est réalisé sous forme numérique, et est donc intercalé entre les éléments 27 et 28. Dans ce cas, l'amplificateur 32 est réalisé à l'aide d'une mémoire morte programmée, de façon connue en soi, pour assurer à la fois, les fonctions mathématiques logarithme, compensation en $\alpha_P$, et correction des constantes. La courbe de transfert d'un tel amplificateur est alors telle que représentée sur la figure 6. Sur cette figure on a en abscisses les valeurs d'entrée $\sigma_3$, et en ordonnées les valeurs de sortie $V_S$. La courbe en trait interrompu serait celle d'un amplificateur logarithmique à pente de 40 dB/Volt non compensé et la courbe en trait fort celle de l'amplificateur 32 compensé par le terme de K log $\alpha_P$ comme indiqué ci-dessus. Sur cette courbe en trait fort, le point d'ordonnée nulle correspond à un écho dû à la pluie seule (sans écho fixe).

On observe que dans cette expression la valeur K log $\sqrt{2}$ + K log k est une valeur constante, la valeur K log $\sigma_P$ caractéristique de l'écho de pluie correspond au signal utile que l'on souhaite obtenir en sortie du dispositif de discrimination, (le rapport entre la valeur moyenne $m_P$ et l'écart-type $\sigma_P$ étant en effet pratiquement constant pour un écho de pluie quelle que soit la densité du nuage), et la valeur K log $(m_F + m_P)$ correspond à la valeur moyenne $m_2$ disponible en sortie de l'amplificateur logarithmique d'entrée 30.

Un dispositif de discrimination d'échos radar associé à une chaîne d'amplification vidéo logarithmique peut donc être obtenu à partir du dispositif de discrimination d'échos radar 31 associé à une chaîne d'amplification vidéo linéaire et à l'amplificateur logarithmique 32, et en faisant suivre ce dernier (ou plus exactement l'élément 28) d'un additionneur 33. L'additionneur 33 permet d'ajouter à la valeur obtenue en sortie de l'amplificateur logarithmique 32 le signal disponible à la sortie de l'amplificateur logarithmique d'entrée 30 (qui peut être assimilé à sa valeur moyenne étant entendu que le dispositif de discrimination est suivi de moyens de traitement permettant de ne retenir que la valeur moyenne des signaux) et retardé, au moyen d'une ligne à retard 34, d'un temps égal au temps de traitement à travers l'ensemble formé par le dispositif de discrimination d'échos radar 31 associé à une chaîne d'amplification vidéo linéaire et à l'amplificateur logarithmique 32.

Cette solution est celle qui conduit à une réalisation pratique présentant un moindre coût.

D'autres applications de l'invention peuvent être envisagées, notamment l'application aux échos de mer et aux échos mobiles.

Bien entendu, si toute la chaîne d'amplification vidéo est linéaire (qu'elle soit analogique ou numérique), on dispose à la sortie des moyens d'intégration, un dispositif de compensation apportant une correction similaire à celle assurée par l'amplificateur 32 (pour compenser la superposition de l'écho fixe et de l'écho de pluie), cette correction étant facilement déduite de la figure 6, la réalisation de ce dispositif de compensation étant évidente pour l'homme de l'art à la lecture de la description ci-dessus.

## Revendications

1. Dispositif de discrimination d'échos radar, pour séparer les échos de pluie des échos dûs au sol, dans le signal vidéo d'un radar météorologique du type à impulsions, comportant en série: des moyens (1, 21) de calcul de fluctuations pour retrancher l'amplitude du signal vidéo incident v(t), correspondant à une impulsion donnée émise par le radar, de l'amplitude du signal vidéo mémorisé, correspondant à une impulsion émise précédemment par le radar des moyens d'intégration (4, 25, 26) pour effectuer un calcul de moyenne des différents résultats obtenus à l'issue du calcul de fluctuations pour plusieurs impulsions émises par le radar, et, le cas échéant, branchés en amont desdits moyens d'intégration, des moyens (5, 24) pour calculer le module du signal obtenu en sortie desdits moyens de calcul de fluctuations, caractérisé par le fait qu'il comporte, à la sortie desdits moyens d'intégration, un dispositif de compensation (32) de l'erreur d'estimation de l'écho de pluie dont la courbe de transfert est affectée d'un terme correctif dû à la superposition de l'écho fixe et de l'écho de pluie, et par le fait que ledit dispositif de compensation est relié à des moyens d'addition (33) pour additionner au signal ainsi obtenu ledit signal vidéo d'entrée dudit dispositif (31) de discrimination d'échos radar, retardé d'un temps égal au temps de traitement à travers lesdits moyens de calcul de fluctuation, lesdits moyens de calcul de module le cas échéant, lesdits moyens d'intégration et à travers ledit dispositif de compensation, le signal obtenu en sortie desdits moyens d'addition étant alors représentatif des échos de pluie.

2. Dispositif selon la revendication 1, caractérisé par le fait que lesdits moyens de calcul de fluctuations contient une ligne à retard réalisée à l'aide d'un registre à transfert de charges (10).

3. Dispositif selon l'une des revendications 1 ou 2, précédé d'une chaîne d'amplification logarithmique (30), caractérisé par le fait que lesdits moyens d'intégration sont suivis d'un amplificateur logarithmique (32) réalisant ledit dispositif de compensation (figure 6).

4. Dispositif selon l'une des revendications 1 à 3, caractérisé par le fait que lesdits moyens d'intégration sont réalisés à l'aide d'un filtre numérique récursif comportant un premier additionneur (12) dont la sortie est reliée par une première ligne à retard (16) à un second additionneur (15) dont la sortie est reliée à une seconde ligne à retard (14) dont la sortie est reliée à la sortie du dispositif ($S_{(t)}$), ainsi qu'à un premier multiplieur ($1/n_1$) et à un second multiplieur ($1/n_2$), les sorties de ces multiplieurs étant respectivement reliées au premier et au second additionneurs.

5. Dispositif selon l'une des revendications 1 ou 3, caractérisé par le fait qu'il comporte un codeur analogique/numérique (20) relié à une première mémoire vive (21) ainsi qu'à deux redresseurs (23', 24'), ces deux redresseurs étant reliés à une unité arithmétique et logique (24), elle-même reliée à un additionneur (25) dont la sortie est reliée à une seconde mémoire vive (26) ainsi qu'à un soustracteur (27), directement et par l'intermédiaire d'un multiplicateur de coefficient (27A), la sortie de la deuxième mémoire vive étant reliée par un multiplicateur de coefficient (27') à un codeur numérique/analogique (28).

6. Dispositif selon l'une des revendications 3 à 5, caractérisé par le fait que ledit amplificateur logarithmique réalisant le dispositif de compensation est réalisé à l'aide d'une memoire morte.


## Patentansprüche

1. Vorrichtung zur Diskriminierung von Radarechos, um die Regen-Echos von den vom Boden verursachten Echos zu trennen, in einem Videosignal eines meteorologischen Radars vom Impulstyp, mit in Reihenschaltung: Mitteln (1) zur Berechnung der Schwankungen, um die Amplitude eines ankommenden Videosignals V(t) das einem vorbestimmten, vom Radar gesendeten Impuls entspricht, von der Amplitude des gespeicherten Videosignals abzuziehen, das einem vom Radar zuvor gesendeten Impuls entspricht, Integrationsmitteln (4, 25, 26), um eine Mittelwertberechnung der verschiedenen Ergebnisse durchzuführen, welche am Ende der Berechnung der Schwankungen für verschiedene, vom Radar gesendete Impulse erhalten werden, Mitteln (5, 24), die gegebenenfalls vor den genannten Integrationsmitteln angeschlossen sind, zur Berechnung des Betrags des am Ausgang der genannten Mittel zur Berechnung der Schwankungen erhaltenen Signals, dadurch gekennzeichnet, daß sie am Ausgang der genannten Integrationsmittel eine Vorrichtung (32) umfaßt zum Ausgleichen der Abschätzungsfehler des Regenechos, wovon die Übertragungskurve mit einem Korrekturterm behaftet wird, der durch die Überlagerung des Festechos und des Regenechos verursacht wird, und daß die genannte Ausgleichvorrichtung mit Addiermitteln (33) verbunden ist, um das so erhaltene Signal zu dem genannten Eingangsvideosignal der genannten Vorrichtung (31) zur Diskriminierung von Radarechos zu addieren, nachdem es um eine Zeit, die gleich der Verarbeitungszeit in den genannten Mitteln zur Berechnung der Schwankungen, gegebenenfalls den genannten Mittel zur Berechnung des Betrags, sowie in den genannten Integrationsmitteln und der genannten Ausgleichvorrichtung verzögert wurde, wobei das am Ausgang der genannten Addiermittel erhaltene Signal dann für die Regenechos repräsentativ ist.

2. Vorrichtung nach Anspruch 1, dadurch gekennzeichnet, daß die genannten Mittel zur Berechnung der Schwankungen eine Verzögerungsleitung umfassen, die mittels eines Ladungsüberführungsregisters (10) verwirklicht ist.

3. Vorrichtung nach den Ansprüchen 1 und 2, der eine Verstärkerkette mit logarithmischer Kennlinie vorausgeht, dadurch gekennzeichnet, daß auf die genannten Integrationsmittel ein logarithmischer Verstärker (32) folgt, der die genannte Ausgleichvorrichtung (Figur 6) bildet.

4. Vorrichtung nach einem der Ansprüche 1 bis 3, dadurch gekennzeichnet, daß die genannten Integrationsmittel mittels eines rekursiven Digitalfilters verwirklicht sind, das einen ersten Addierer (12) umfaßt, wovon der Ausgang über eine erste Verzögerungsleitung (16) mit einem zweiten Addierer (15) verbunden ist, dessen Ausgang mit einer zweiten Verzögerungsleitung (14) verbunden ist, deren Ausgang mit dem Ausgang der Vorrichtung ($S_{(t)}$) sowie mit einem ersten Multiplizierer ($1/n_1$) und einem zweiten Multiplizierer ($1/n_2$) verbunden ist, wobei die Ausgänge dieser Multiplizierer mit dem ersten bzw. dem zweiten Addierer verbunden sind.

5. Vorrichtung nach einem der Ansprüche 1 und 3, dadurch gekennzeichnet, daß sie einen Analog/Digital-Kodierer (20) umfaßt, der mit einem ersten Arbeitsspeicher (21) sowie mit zwei Gleichrichtern (23', 24') verbunden ist, wobei diese beiden Gleichrichter mit einer arithmetischen und logischen Einheit (24) verbunden sind, die ihrerseits mit einem Addierer (25) verbunden ist, dessen Ausgang mit einem zweiten Arbeitsspeicher (26) sowie einem Subtrahierer (27) unmittelbar sowie über einen Koeffizientenmultiplizierer (27A) verbunden ist, wobei der Ausgang des zweiten Arbeitsspeichers über einen Koeffizientenmultiplizierer (27') mit einem Analog/Digital-Kodierer (28) verbunden ist.

6. Vorrichtung nach einem der Ansprüche 3 bis 5, dadurch gekennzeichnet, daß der die Ausgleichvorrichtung bildende genannte logarithmische Verstärker mittels eines Festwertspeichers verwirklicht ist.

# 0 147 305

**Claims**

1. A device for discriminating radar echoes, for separating echoes due to rain from echoes due to the earth, in the video signal of an impulse type meteorological radar installation, comprising, in series, means (1 and 21) for calculation of the fluctuations in order to subtract the amplitude of the incident video signal $V(+)$, corresponding to a given impulse emitted by the radar installation, from the amplitude of the stored video signal, corresponding to an impulse which has been previously emitted by the radar installation, integrating means (4, 25 and 26) in order to effect a calculation of the average of the different results obtained at the end of the calculation of fluctuations for several impulses emitted by the radar installation, and if needed, means connected on the input side of the said integrating means, means (5 and 24) in order to calculate the module of the signal obtained and the output of the means for calculating fluctuations, characterized in that it comprises, at the output of the said integrating means, a device for compensation (32) of the estimation error for the rain echo, whose transfer curve is altered by a correcting term due to the superposition of the fixed echo and the rain echo, and in that the said device for compensation is connected to adding means (33) in order to add to the signal so obtained the said input video signal of the said device (31) for discrimination of the radar echoes, retarded by a time equal to the time of processing while passing through the said fluctuation calculation means, the said module calculation means, if needed, the said integrating means and through the said compensation device, the signal obtained at the output of the said adding means being then representative of the rain echoes.

2. The device as claimed in claim 1 characterized in that the said fluctuation calculation means comprise a delay line embodied in the form of a charge transfer register (10).

3. The device as claimed in claim 1 or claim 2 preceded by a logarithmic amplifying chain (30) characterized in that the said integrating means are followed by a logarithmic amplifier (32) forming the compensation device (figure 6).

4. The device as claimed in any one of the claims 1 through 3 characterized in that the integrating means are embodied in the form of a recursive numerical filter comprising a first adder (12), whose output is connected by a first delay line (16) with a second adder (16) whose output is connected with a second delay line (14), whose output is connected with the output of the device ($S_{(t)}$), and also with a first multiplier ($1/_{n1}$) and with a second multiplier ($1/_{n2}$), the outputs of these multipliers being respectively connected with the first and the second adders.

5. The device as claimed in either of claims 1 and 3, characterized in that it comprises a analog-digital encoder (20) connected with a first RAM (21) and with two demodulators (23' and 24'), these two demodulators being connected with a logic and arithmetic unit (24) itself connected with an adder (25) whose output is connected with a second RAM (26) and with a subtracter (27), directly and by the intermediary of a coefficient multiplier (27A), the output of the second RAM being connected by a coefficient multiplier (27') with a digital-analog encoder (28).

6. The device as claimed in any one of the claims 3 through 5 characterized in that the said logarithmic amplifier embodying the compensation device is embodied in the form of a ROM.

6

FIG.1

FIG.3

# FIG_2

# FIG_6

pluie seule

FIG.4

# FIG.5